# EUROPEAN PATENT SPECIFICATION

(11) **EP 4 475 471 B1**
(45) Date of publication and mention of the grant of the patent: **03.06.2026**
(21) Application number: 23762752.6
(22) Date of filing: 20.02.2023
(51) Int. Cl.: H04L 5/00, H04W 36/00, H04W 36/08

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 04.03.2022 CN 202210211027
(43) Date of publication of application: 11.12.2024
(60) Divisional application: 25225766.2
(73) Proprietor: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); LI, Bingzhao, Shenzhen, Guangdong 518129 (CN); SHI, Yulong, Shenzhen, Guangdong 518129 (CN)
(74) Representative: Gill Jennings & Every LLP
(86) International application number: PCT/CN2023/077108
(87) International publication number: WO 2023/165351

(56) References cited:
- CN-A- 110 475 335
- CN-A- 111 818 564
- CN-A- 114 599 057
- US-A1- 2021 175 985
- ERICSSON: "Use of NCD-SSB instead of CD-SSB for RedCap UEs", vol. RAN WG2, no. Electronic meeting; 20211101 - 20211112, 29 October 2021 (2021-10-29), XP052071997, Retrieved from the Internet <URL:https://ftp.3gpp.org/tsg_ran/WG2_RL2/TSGR2_116-e/Docs/R2-2110773.zip R2-2110773 - Use of NCD-SSB instead of CD-SSB for RedCap UEs.docx> [retrieved on 20211029]
- RAN WG4: "Reply LS on use of NCD-SSB instead of CD-SSB for RedCap UE", vol. RAN WG4, no. Electronic Meeting; 20211101 - 20211112, 22 October 2021 (2021-10-22), XP052070178, Retrieved from the Internet <URL:https://ftp.3gpp.org/tsg_ran/WG4_Radio/TSGR4_101-e/Docs/R4-2118822.zip R4-2118822.doc> [retrieved on 20211022]
- HUAWEI, HISILICON: "Handling of SSB information in MeasurementTimingConfiguration", 3GPP TSG-RAN WG2 # 103BIS R2-1814145, 28 September 2018 (2018-09-28), XP051523604
- INTEL: "AdHoc Minutes for NR measurement gap and measurement capability", 3GPP TSG-RAN4 MEETING #88 R4-1811398, 29 August 2018 (2018-08-29), XP051580287

## Description

### TECHNICAL FIELD

This application relates to the field of communication technologies, and in particular, to a communication method and apparatus.

### BACKGROUND

Currently, in a new radio system, a terminal device in an idle state can perform cell reselection based on a synchronization signal block (synchronization signal block, SSB). When the terminal device performs cell reselection based on the SSB, cell reselection is performed based on a cell defining synchronization signal/physical broadcast channel block (cell defining synchronization signal block, CD-SSB). However, there may be no CD-SSB on an initial bandwidth part (bandwidth part, BWP) of the terminal device. Consequently, the terminal device cannot normally perform cell reselection, and a problem such as communication interruption or poor communication quality is caused.

Therefore, how to improve communication performance of the terminal device becomes an urgent technical problem to be resolved.

Ericsson ("Use of NCD-SSB instead of CD-SSB for RedCap UEs", 3GPP, 2021, XP052071997) discloses a broad discussion on the use of NCD-SSBs instead of CD-SSBs for reduced capability UEs. RAN WG4 ("Reply LS on use of NCD-SSB instead of CD-SSB for RedCap UE", 3GPP, 2021, XP052070178) discloses a broad discussion on the use of NCD-SSBs instead of CD-SSBs for reduced capability UEs.

### SUMMARY

This application provides a communication method and apparatus, to improve communication performance of a terminal device.

### BRIEF DESCRIPTION OF DRAWINGS

FIG. 1 is a diagram of an intra-frequency neighboring cell according to an embodiment of this application;
FIG. 2 is a diagram of an inter-frequency neighboring cell according to an embodiment of this application;
FIG. 3 is a schematic flowchart of cell reselection according to an embodiment of this application;
FIG. 4 is a diagram of a cell-dedicated bandwidth according to an embodiment of this application;
FIG. 5 is a diagram of a communication system according to an embodiment of this application;
FIG. 6 is a schematic flowchart of an intra-frequency cell reselection method according to an embodiment of this application;
FIG. 7 is a schematic flowchart of intra-frequency cell reselection according to an embodiment of this application;
FIG. 8 is a schematic flowchart of an inter-frequency cell reselection method according to an embodiment of this application;
FIG. 9 is a schematic flowchart of inter-frequency cell reselection according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

The following further describes in detail this application with reference to accompanying drawings.

The following describes some terms in embodiments of this application, to facilitate understanding of a person skilled in the art.
1. A terminal device may be a device having a wireless transceiver function or a chip that can be disposed in any device, or may be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer having the wireless transceiver function, an XR device (such as a VR device, an AR device, or an MR device), a wireless terminal in industrial control (industrial control), a wireless terminal in self driving (self driving), a wireless terminal in video surveillance, a wearable terminal device, or the like. Alternatively, the terminal device may be eMBB UE, URLLC UE, an uncrewed aerial vehicle, another internet of things (internet of things, IoT) device, a positioning device, the reduced capability terminal device described in the foregoing descriptions of the term 1, or the like.
   A network device may be an apparatus configured to implement a function of an access network device. The access network device may be a device that communicates with a wireless terminal device over an air interface in an access network by using one or more cells. For example, the access network device may be a next generation NodeB (next Generation NodeB, gNB) in an NR system, an evolved NodeB (evolutional NodeB, eNB) in a long term evolution (long term evolution, LTE) system, or the like. Alternatively, the network device may be an apparatus that can support the network device in implementing a function of an access network device, for example, a chip system. The apparatus may be installed in the network device.
2. A reduced capability (reduced capability, REDCAP) terminal device (REDCAP UE) includes REDCAP UE defined in 3GPP Rel-17 and REDCAP UE defined in 3GPP Rel-18, and specifically, may have at least one of the following features:
   (1) A maximum bandwidth at a frequency band (frequency range, FR) 1 during initial access and/or after initial access does not exceed 20 MHz. A maximum bandwidth at an FR 2 during initial access and/or after initial access does not exceed 100 MHz, and a maximum bandwidth supported by the REDCAP terminal device defined in 3GPP Rel-18 is 5 MHz.
   (2) A minimum quantity of supported receiving antenna (Rx) branches is 1.
   (3) A protocol version is NR Rel-17 or later.
   (4) Only half-duplex frequency division duplex (frequency division duplex, FDD) is supported.
   (5) If there is one Rx branch, one downlink (downlink, DL) maximum multiple-in multiple-out (multiple-in multiple-out, MIMO) layer is supported. If there are two Rx branches, two DL MIMO layers are supported.

The reduced capability terminal device may be understood as a terminal device with a reduced capability compared with a legacy terminal device (legacy UE). The capability includes but is not limited to features in the foregoing five aspects. The legacy terminal device may be, for example, an enhanced mobile broadband (enhanced Mobile Broadband, eMBB) terminal device or an ultra-reliable low-latency communication (ultra-reliable low-latency communication, URLLC) terminal device.

### 3. Criterion S

The criterion S means that a measurement value (referred to as a Srxlev value below) related to reference signal received power (reference signal received power, RSRP) of a cell on which a terminal device selects to camp should be greater than 0, and a measurement value (referred to as a Squal value below) related to reference signal received quality (reference signal received quality, RSRQ) should be greater than 0. That is, the terminal device selects a cell whose Srxlev value is greater than 0 and whose Squal value is greater than 0 to camp on.

The Srxlev value satisfies the following formula: Srxlev=Qrxlevmeas-(Qrxlevmin+Qrxlevminoffset)-Pcompensation-Qoffsettemp. Qrxlevmeas is a receive level value measured in the cell, Qrxlevmin is a minimum receive level value, Qrxlevminoffset is an offset of the minimum receive level value, and Pcompensation is equal to MAX(PEMAX-PUMAX, 0), where PEMAX is maximum available uplink transmit power configured by the terminal device, and PUMAX is maximum transmit power of the terminal device, and is determined by a capability level of the terminal device. Qoffsettemp is temporary power compensation.

The Squal value satisfies the following formula: Squal=Qqualmeas-(Qqualmin+Qqualminoffset)-Qoffsettemp, where Qqualmeas is a cell signal quality value measured in the cell; Qqualmin is a minimum signal quality value; Qqualminoffset is an offset of the minimum signal quality value; and Qoffsettemp is temporary power compensation.

### 4. Criterion R

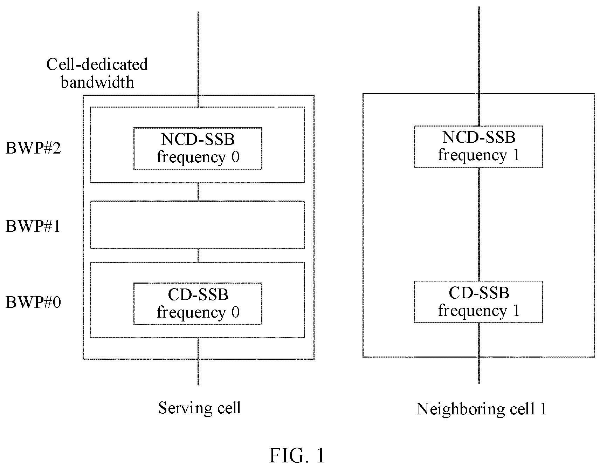

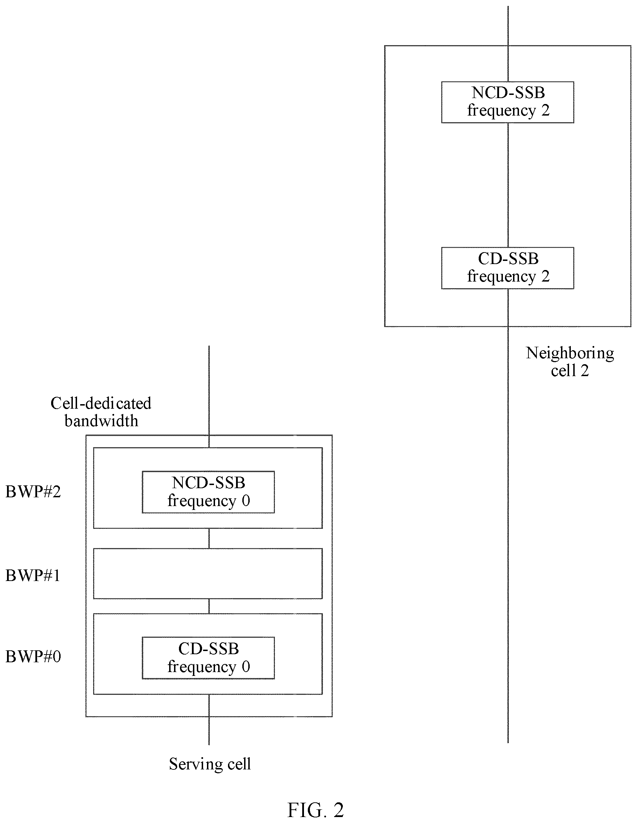

Cell reselection is a process in which a terminal device in an idle state monitors signal quality of a neighboring cell and a cell (referred to as a serving cell below) on which the terminal device currently camps, to select a best cell to provide a service signal. The neighboring cell may include an intra-frequency neighboring cell and an inter-frequency neighboring cell, and it is clear that the neighboring cell may also include other types of neighboring cells, which are not listed one by one herein. The intra-frequency neighboring cell is a neighboring cell that has a same center frequency as that of the serving cell. As shown in FIG. 1, the inter-frequency neighboring cell is a neighboring cell that has a different center frequency from that of the serving cell, as shown in FIG. 2. A process of performing cell reselection in the intra-frequency neighboring cell may be referred to as intra-frequency cell reselection, and a process of performing cell reselection in the inter-frequency neighboring cell may be referred to as inter-frequency cell reselection. For intra-frequency neighboring cells or inter-frequency neighboring cells with a same priority, the terminal device may perform reselection and sorting on the neighboring cells according to the criterion R.

The criterion R is for determining a target cell in the cell reselection process. The criterion R is as follows. If an R value of the neighboring cell is greater than an R value of the serving cell within detection time, the neighboring cell can be selected as a candidate cell for cell reselection. The R value of the neighboring cell satisfies the following formula: Rn=Qmeas,n-Qoffset-Qoffsettemp, where Rn is the R value of the neighboring cell, Qmeas,n is a measurement quantity of a signal of the neighboring cell, Qoffset is a cell offset, and Qoffsettemp is a temporary compensation value of the neighboring cell. In addition, the R value of the serving cell satisfies the following formula: Rs=Qmeas,s+Qhyst-Qoffsettemp, where Rs is the R value of the serving cell, Qmeas,s is a measurement quantity of a signal of the serving cell, Qhyst is a cell reselection hysteresis value, and Qoffsettemp is a temporary compensation value of the serving cell.

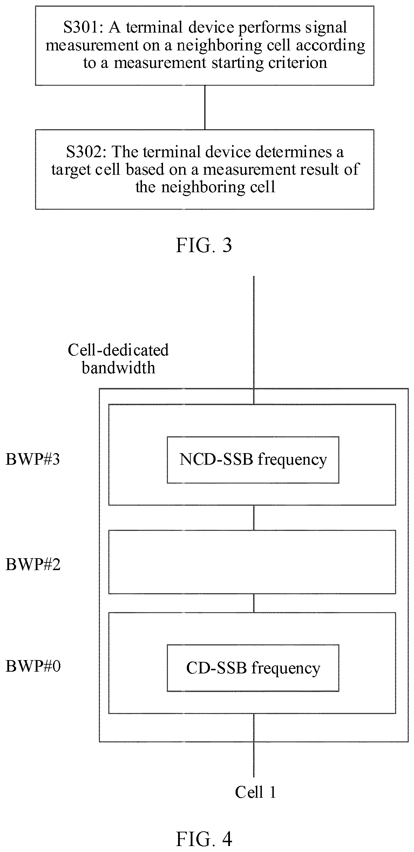

As shown in FIG. 3, a cell reselection process may include the following steps.

S301: A terminal device performs signal measurement on a neighboring cell according to a measurement starting criterion.

In an intra-frequency cell reselection process, a measurement starting criterion may be as follows. When a signal of a serving cell satisfies Srxlev>SIntraSearchP and Squal>SIntraSearchQ, the terminal device may not perform signal measurement on an intra-frequency neighboring cell. When a signal of a serving cell does not satisfy Srxlev>SIntraSearchP and Squal>SIntraSearchQ, the terminal device performs signal measurement on an intra-frequency neighboring cell. SIntraSearchP and SIntraSearchQ are thresholds for starting intra-frequency cell signal measurement, and may be broadcast by a network device by using a system message.

In an inter-frequency or inter-system cell reselection process, the network device may set a priority for each frequency. For a neighboring cell with a high-priority frequency, a priority of a frequency of the neighboring cell with the high-priority frequency is higher than a priority of a frequency of the serving cell, and the terminal device may always perform signal measurement on the neighboring cell. For a neighboring cell with a same-priority frequency and a neighboring cell with a low-priority frequency, a priority of a frequency of the neighboring cell with the same-priority frequency is equal to the priority of the frequency of the serving cell, and a priority of a frequency of the neighboring cell with the low-priority frequency is lower than the priority of the frequency of the serving cell. A measurement starting criterion may be as follows: When the signal of the serving cell satisfies Srxlev>SnonIntraSearchP and Squal>SnonIntraSearchQ, the terminal device may not perform signal measurement on these inter-frequency neighboring cells. When the signal of the serving cell does not satisfy Srxlev>SnonIntraSearchP and Squal>SnonIntraSearchQ, the terminal device may perform signal measurement on the inter-frequency neighboring cells. SnonIntraSearchP and SnonIntraSearchQ are thresholds for starting inter-frequency neighboring cell signal measurement, and may be broadcast by the network device by using a system message.

For Srxlev and Squal of the serving cell, refer to the related descriptions in the foregoing descriptions of the term 3. Details are not described herein again.

S302: The terminal device determines a target cell based on a measurement result of the neighboring cell.

In the intra-frequency cell reselection process, the terminal device may sort R values of candidate neighboring cells that satisfy a criterion R, and the terminal device may select a cell with a highest R value as the target cell.

In the inter-frequency cell reselection process, for the neighboring cell with the high-priority frequency, the terminal device may use, as a target cell, a neighboring cell with a highest-priority frequency in candidate neighboring cells that satisfy the following conditions, where the conditions include that both Srxlev and Squal of the neighboring cell satisfy corresponding thresholds respectively, and duration is greater than preset duration. The threshold is a threshold used for the neighboring cell to reselect the neighboring cell with the high-priority frequency.

If no neighboring cell with the high-priority frequency satisfies the cell reselection conditions, the terminal device may select the target cell from neighboring cells with the same-priority frequency, the terminal device may sort R values of candidate neighboring cells that satisfy a criterion R, and the terminal device may select a cell with a highest R value as the target cell.

If no neighboring cell with the high-priority frequency and no neighboring cell with the same-priority frequency satisfy the cell reselection conditions, the terminal device may select the target cell from neighboring cells with the low-priority frequency. For the neighboring cell with the low-priority frequency, if both Srxlev and Squal of the serving cell are less than corresponding thresholds respectively, where the threshold is a threshold used for the serving cell to reselect the neighboring cell with the low-priority frequency, and both Srxlev and Squal of the neighboring cell are greater than corresponding thresholds respectively, where the threshold is a threshold used for the neighboring cell to reselect the neighboring cell with the low-priority frequency, and duration is greater than preset duration.

### 5. CD-SSB

The CD-SSB is an SSB associated with a system information block (system information block, SIB) 1. For example, the CD-SSB is an SSB that is capable of configuring necessary information of a cell (for example, a control-resource set (control-resource set, CORESET) #0 and/or the SIB 1). The CORESET#0 may be used by a terminal device to parse the SIB 1, and the SIB 1 is a SIB for providing cell feature information. For example, the SIB 1 includes system information of a non-access (non-access, NAS) layer. In addition, the CD-SSB frequency in this application is a frequency of the CD-SSB, to be specific, a frequency location corresponding to the CD-SSB.

### 6. NCD-SSB

The NCD-SSB is an SSB that is not associated with a SIB 1. For example, the NCD-SSB lacks complete information for configuring a cell. For example, the NCD-SSB includes only the SSB, or lacks a necessary field of the SIB 1. In addition, the NCD-SSB frequency in this application is a frequency of the NCD-SSB, to be specific, a frequency location corresponding to the NCD-SSB.

In embodiments of this application, the terms "system" and "network" may be used interchangeably. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In addition, unless otherwise stated, ordinal numbers such as "first" and "second" in embodiments of this application are used to distinguish between a plurality of objects, but are not intended to limit sizes, content, a sequence, a time sequence, priorities, importance, or the like of the plurality of objects. For example, first information and second information are merely used to distinguish between different information, and do not indicate different content, priorities, importance, or the like of the two pieces of information.

The foregoing describes concepts of some names used in embodiments of this application. The following describes technical features of embodiments of this application.

Currently, measurement based on an SSB is agreed with in a 5G standard. A terminal device in an idle state may perform cell reselection based on the SSB. Currently, when the terminal device performs cell reselection based on the SSB, cell reselection is performed based on a CD-SSB frequency. However, there may be no CD-SSB on an initial BWP of the terminal device. Consequently, the terminal device cannot normally perform cell reselection, and a problem such as communication interruption or poor communication quality is caused. For example, in a current discussion for RedCap UE, it is supported to set a bandwidth part (bandwidth part, BWP) dedicated to the RedCap UE at an edge of a carrier. The BWP dedicated to the RedCap UE includes but is not limited to an initial (initial) BWP dedicated to the RedCap UE. For example, the BWP dedicated to the RedCap UE may include an initial uplink (uplink, UL) BWP and an initial downlink (downlink, DL) BWP, where a center frequency of the initial uplink BWP is the same as a center frequency of the initial downlink BWP. In addition, considering that current time division duplexing (time division duplexing, TDD) UE has only one phase-locked loop, the current BWP dedicated to the RedCap UE may not be configured with a CD-SSB frequency. For example, as shown in FIG. 4, a cell 1 includes a BWP#0, a BWP#2, and a BWP#3. The BWP#0 includes a CD-SSB, the BWP#2 includes neither a CD-SSB nor an NCD-SSB, and the BWP#3 includes an NCD-SSB but does not include a CD-SSB. If an initial BWP of a terminal device is configured as the BWP#2 or the BWP#3, there is no CD-SSB in the initial BWP of the terminal device. In this scenario, the terminal device cannot perform cell reselection based on a CD-SSB frequency. Consequently, communication quality of the terminal device is poor, and even communication interruption occurs.

Therefore, how to improve communication performance of the terminal device becomes an urgent technical problem to be resolved.

Based on this, embodiments of this application provide a communication method and apparatus, to improve the communication performance of the terminal device. The method and the apparatus are based on a same inventive concept. Because the method and the apparatus have a similar problem-resolving principle, for implementations of the apparatus and the method, refer to each other, and repeated parts are not described again.

The communication method according to this application may be applied to various communication systems, for example, internet of things (internet of things, IoT), narrowband internet of things (narrowband internet of things, NB-IoT), LTE, a 5th generation (5G) communication system, an LTE and 5G hybrid architecture, a 5G new radio (new radio, NR) system, and a 6G system or a new communication system emerging in future communication development.

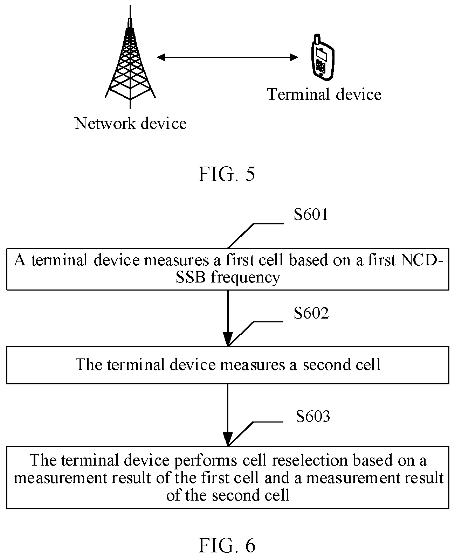

FIG. 5 shows an architecture of a communication system to which a communication method according to an embodiment of this application is applicable. The architecture of the communication system may include a network device and a terminal device.

A network architecture and a service scenario that are described in embodiments of this application are intended to describe the technical solutions in embodiments of this application more clearly, and do not constitute a limitation on the technical solutions according to embodiments of this application. A person of ordinary skill in the art may know that, with evolution of the network architecture and emergence of a new service scenario, the technical solutions according to embodiments of this application are also applicable to a similar technical problem.

The following describes the technical solutions in embodiments of this application with reference to the accompanying drawings in embodiments of this application.

The method according to this application may be applied to a terminal device, and the terminal device camps on a first cell in an idle state or an inactive state. The following separately describes an intra-frequency cell reselection method and an inter-frequency cell reselection method of the terminal device.

FIG. 6 is a schematic flowchart of an intra-frequency cell reselection method according to this application. The method includes the following steps.

S601: A terminal device measures a first cell based on a first NCD-SSB frequency.

It should be understood that S601 is merely a possible implementation of measuring the first cell by the terminal device. In specific implementation, the first cell may be measured in another manner. For example, the terminal device may alternatively measure the first cell based on a CD-SSB frequency, to obtain a second measurement result. For another example, the terminal device may measure the first cell based on a first NCD-SSB frequency and a CD-SSB frequency. The terminal device determines a measurement result of the first cell based on a first measurement result and the second measurement result.

To distinguish between the foregoing implementations, the implementation of measuring the first cell based on the first NCD-SSB frequency may be referred to as Manner 1.1, the implementation of measuring the first cell based on the CD-SSB frequency may be referred to as Manner 1.2, and the implementation of measuring the first cell based on the first NCD-SSB frequency and the CD-SSB frequency may be referred to as Manner 1.3.

In a possible implementation solution of Manner 1.3, the terminal device may use, as the measurement result of the first cell, an average value of the first measurement result obtained by measuring the first cell based on the first NCD-SSB frequency and the second measurement result obtained by measuring the first cell based on the CD-SSB frequency.

In another possible implementation solution of Manner 1.3, the terminal device may use, as the measurement result of the first cell, a weighted sum of the first measurement result obtained by measuring the first cell based on the first NCD-SSB frequency and the second measurement result obtained by measuring the first cell based on the CD-SSB frequency.

In a possible implementation, before step S602, the terminal device may determine that the measurement result of the first cell satisfies a threshold corresponding to the first NCD-SSB frequency. The threshold corresponding to the first NCD-SSB frequency is configured by a network device, or the threshold corresponding to the first NCD-SSB frequency is determined based on a threshold corresponding to the CD-SSB frequency and a power compensation value of the first cell.

For example, the terminal device may perform the following step S602 when determining that the measurement result of the first cell satisfies the following formulas:
Srxlev_{NCD-SSB}≤SIntraSearchP_{NCD-SSB}, and Squal_{NCD-SSB}≤SIntraSearchQ_{NCD-SSB}, where Srxlev_{NCD-SSB} and SquaI_{NCD-SSB} are determined based on the measurement result of the first cell, SIntraSearchP_{NCD-SSB} and SIntraSearchQ_{NCD-SSB} are thresholds corresponding to a first NCD-SSB for starting intra-frequency cell signal measurement, and SIntraSearchP_{NCD-SSB} and SIntraSearchQ_{NCD-SSB} are configured by the network device. For example, the network device may broadcast, by using a system message such as a SIB 1, the thresholds SIntraSearchP_{NCD-SSB} and SIntraSearchQ_{NCD-SSB} that correspond to the first NCD-SSB and that are for starting the intra-frequency cell signal measurement.

For another example, the terminal device may perform the following step S602 when determining that the measurement result of the first cell satisfies the following formulas:
Srxlev_{NCD-SSB}+offset1≤SIntraSearchP_{CD-SSB} and Squal_{NCD-SSB}+offset1≤SIntraSearchQ_{CD-SSB}; or Srxlev_{NCD-SSB}≤SSIntraSearchP_{CD-SSB}-offset1, and Squal_{NCD-SSB}≤SIntraSearchQ_{CD-SSB}-offset1.

Srxlev_{NCD-SSB} and SquaI_{NCD-SSB} are determined based on the measurement result of the first cell, SIntraSearchP_{CD-SSB} and SIntraSearchQ_{CD-SSB} are thresholds corresponding to a CD-SSB for starting intra-frequency cell signal measurement, and SIntraSearchP_{CD-SSB} and SIntraSearchQ_{CD-SSB} are configured by the network device. For example, the network device may broadcast, by using a system message such as a SIB 1, the thresholds SIntraSearchP_{CD-SSB} and SIntraSearchQ_{CD-SSB} that correspond to the CD-SSB and that are for starting the intra-frequency cell signal measurement. offset is the power compensation value of the first cell. Optionally, offset may include a power compensation value corresponding to RSRP and/or a power compensation value corresponding to RSRQ. A power offset corresponding to the RSRP and a power offset corresponding to the RSRQ may be a same power offset, or may be different power offsets. This is not specifically limited herein.

For a manner of determining Srxlev_{NCD-SSB} and SquaI_{NCD-SSB}, refer to the manner of determining Srxlev and Squal in the foregoing descriptions of the term 3. Details are not described herein again.

S602: The terminal device measures a second cell.

In an implementation, the terminal device may measure one or more neighboring cells, and the second cell is any one of the one or more neighboring cells. In this embodiment of this application, the second cell is used as an example to describe a manner of measuring the neighboring cell by the terminal device. For a manner of measuring another neighboring cell, refer to a manner of measuring the second cell.

Specifically, the terminal device may measure the second cell in any one of the following three manners.

Manner 2.1: The terminal device may measure the second cell based on the first NCD-SSB frequency. In this manner, the terminal device may measure a neighboring cell based on the first NCD-SSB frequency, and the terminal device does not need to switch a BWP due to measurement. Therefore, power consumption of the terminal device can be reduced. For example, the terminal device may directly receive paging and initiate an RACH on a BWP including the first NCD-SSB frequency, instead of performing synchronization and measurement based on the CD-SSB frequency and then transferring to the BWP including the first NCD-SSB frequency to receive the paging and the RACH, so that faster access can be implemented, and frequent switching between different BWPs of the terminal device in an idle state can be reduced.

Manner 2.2: The terminal device may alternatively measure the second cell based on the CD-SSB frequency. In this manner, a neighboring cell for which the first NCD-SSB frequency is not configured can be measured, so that accuracy of a measurement result of the neighboring cell can be improved, and the terminal device can switch, through reselection, to a neighboring cell with better signal quality for communication, to improve communication performance of the terminal device.

Manner 2.3: The terminal device may measure the second cell based on the first NCD-SSB frequency and the CD-SSB frequency. In this manner, the neighboring cell is measured based on the first NCD-SSB frequency and the CD-SSB frequency, so that the accuracy of a measurement result of the neighboring cell can be improved, and the terminal device can switch, through reselection, to a neighboring cell with a better signal quality for communication, to improve communication performance of the terminal device.

For example, the terminal device may measure the second cell based on the first NCD-SSB frequency to obtain a third measurement result, and measure the second cell based on the CD-SSB frequency to obtain a fourth measurement result. The terminal device determines a measurement result of the second cell based on the third measurement result and the fourth measurement result. For example, an average value of the third measurement result and the fourth measurement result may be used as the measurement result of the second cell. Alternatively, a weighted sum of the third measurement result and the fourth measurement result may be used as the measurement result of the first cell.

For another example, the terminal device may measure, based on the first NCD-SSB frequency, a plurality of neighboring cells including the second cell. If the terminal device determines, based on measurement results of the plurality of neighboring cells, that the plurality of neighboring cells cannot be used as target cells for reselection, or no neighboring cell is detected on the frequency, the terminal device measures the plurality of neighboring cells based on the CD-SSB frequency.

For still another example, the terminal device may measure at least one first neighboring cell based on the first NCD-SSB frequency, and measure at least one second neighboring cell based on the CD-SSB frequency. The second cell may belong to the first neighboring cell, or may belong to the second neighboring cell.

In an implementation, the terminal device may alternatively determine, based on an indication of the network device, to measure the second cell in Manner 2.1, Manner 2.2, or Manner 2.3. For example, the network device may determine, based on a configuration of an NCD-SSB frequency of the second cell, a frequency used by the terminal device to measure the second cell.

For example, the network device sends first information to the terminal device. The first information indicates that the first NCD-SSB frequency can be used for neighboring cell measurement, or the first information indicates that neighboring cell measurement is performed based on the first NCD-SSB frequency, or the first information indicates that there are plenty of neighboring cells on the first NCD-SSB frequency for cell reselection, or the first information indicates that neighboring cell measurement may be performed only based on the first NCD-SSB frequency. Correspondingly, the terminal device may measure the second cell based on the first information in Manner 2.1.

For another example, the network device sends second information to the terminal device. The second information indicates that the neighboring cell is measured based on the CD-SSB frequency, or the second information indicates that the neighboring cell is measured with reference to the CD-SSB frequency, or the second information indicates that the first NCD-SSB frequency and the CD-SSB frequency are used during neighboring cell measurement, or the second information indicates that the CD-SSB may be used for neighboring cell measurement, or neighboring cell measurement is performed only based on the CD-SSB. Correspondingly, the terminal device may measure the second cell based on the second information in Manner 2.3.

For still another example, the network device sends third information to the terminal device. The third information indicates that neighboring cell measurement can be performed only based on the CD-SSB frequency. Correspondingly, the terminal device may measure the second cell based on the third information in Manner 2.2. In an example description, the "neighboring cell measurement can be performed only based on the CD-SSB frequency" may be understood as that the neighboring cell can be measured only based on the CD-SSB frequency when the neighboring cell is measured.

In another implementation, the terminal device may alternatively autonomously determine a manner of measuring the neighboring cell. For example, the terminal device may measure, based on the first NCD-SSB frequency, the plurality of neighboring cells including the second cell. If the plurality of neighboring cells cannot be used as the target cells for reselection, the terminal device measures the plurality of neighboring cells based on the CD-SSB frequency.

S603: The terminal device performs cell reselection based on the measurement result of the first cell and the measurement result of the second cell.

In an implementation, the terminal device may determine an R value of the first cell based on the measurement result of the first cell, and determine an R value of the second cell based on the measurement result of the second cell. The terminal device performs cell reselection based on the R value of the first cell and the R value of the second cell.

Optionally, when determining the R value of the first cell, the terminal device may determine the R value of the first cell based on the measurement result of the first cell and the power compensation value of the first cell. For example, Rs=Qmeas,s+Qhyst-Qoffsettemp+offset1. For meanings of Rs, Qmeas,s, Qhyst and Qoffsettemp, refer to the related descriptions in the foregoing descriptions of the term 4, and offset1 is a power offset corresponding to the first cell.

In an implementation, the power compensation value of the first cell may be broadcast by the network device. For example, the network device may broadcast the power compensation value of the first cell when power of a reference signal of the first cell on the first NCD-SSB frequency is different from power of a reference signal of the first cell on the CD-SSB frequency.

In the foregoing manner, impact of different transmit power on the cell reselection can be reduced by using the power compensation value. For example, it is assumed that transmit power of the reference signal of the first cell on the first NCD-SSB frequency is different from transmit power of the reference signal of the first cell on the CD-SSB frequency. Therefore, measurement results of the first cell determined by the terminal device based on the first NCD-SSB frequency and the CD-SSB frequency may be different, so that obtained cell reselection results may be different. In the foregoing manner, measurement results based on different frequencies may be aligned by using the power compensation value, so that accuracy of the cell reselection can be improved.

Optionally, when determining the R value of the second cell, the terminal device may determine the R value of the second cell based on the measurement result of the second cell and a power compensation value of the second cell. For example, Rn=Qmeas,n-Qoffset-Qoffsettemp+offset2. For meanings of Rn, Qmeas,n, Qoffset and Qoffsettemp, refer to the related descriptions in the foregoing descriptions of the term 4, and offset2 is a power offset corresponding to the second cell.

In an implementation, the power compensation value of the second cell may be broadcast by the network device. For example, if the terminal device measures the second cell in the manner a or the manner c, the network device may broadcast the power compensation value of the second cell when power of a reference signal of the second cell on the first NCD-SSB frequency is different from power of a reference signal of the second cell on the CD-SSB frequency.

In the foregoing manner, measurement results based on different frequencies may be aligned by using the power compensation value, so that impact of different transmit power on the cell reselection can be reduced, and accuracy of the cell reselection can be improved. For example, after switching, through reselection, to the second cell, the terminal device may camp on another frequency of the second cell, for example, the CD-SSB frequency. In the foregoing design, the measurement results based on different frequencies may be aligned by using the power compensation value, so that the accuracy of the cell reselection can be improved.

Optionally, the network device may configure at least one NCD-SSB frequency in the system message. In specific implementation, the network device may explicitly or implicitly indicate a cell corresponding to the NCD-SSB frequency.

In an implementation, the network device may indicate, based on a CD-SSB frequency associated with the NCD-SSB frequency, the cell corresponding to the NCD-SSB frequency. Specifically, the network device may explicitly or implicitly indicate an association relationship between the NCD-SSB frequency and the CD-SSB frequency. For example, the network device may indicate the CD-SSB frequency associated with the NCD-SSB frequency by using a sequence number of the frequency. For example, if a sequence number of a second NCD-SSB frequency in an NCD-SSB frequency list is 3, there is an association relationship between the second NCD-SSB frequency and a CD-SSB frequency whose sequence number is 3 in a CD-SSB frequency list.

In another implementation, the network device may broadcast an NCD-SSB frequency list. The NCD-SSB frequency list includes at least one NCD-SSB frequency and a physical cell identifier (physical cell identifier, PCI) corresponding to each NCD-SSB frequency. NCD-SSB frequencies associated with a same PCI belong to a same cell.

In another implementation, the network device may broadcast a neighboring cell list. The neighboring cell list includes at least one neighboring cell, and optionally includes an NCD-SSB frequency and/or a CD-SSB frequency corresponding to each neighboring cell. In other words, a configuration of each neighboring cell includes the corresponding NCD-SSB frequency and/or CD-SSB frequency. In a possible implementation, for an intra-frequency neighboring cell, the network device may not indicate a CD-SSB frequency of the neighboring cell.

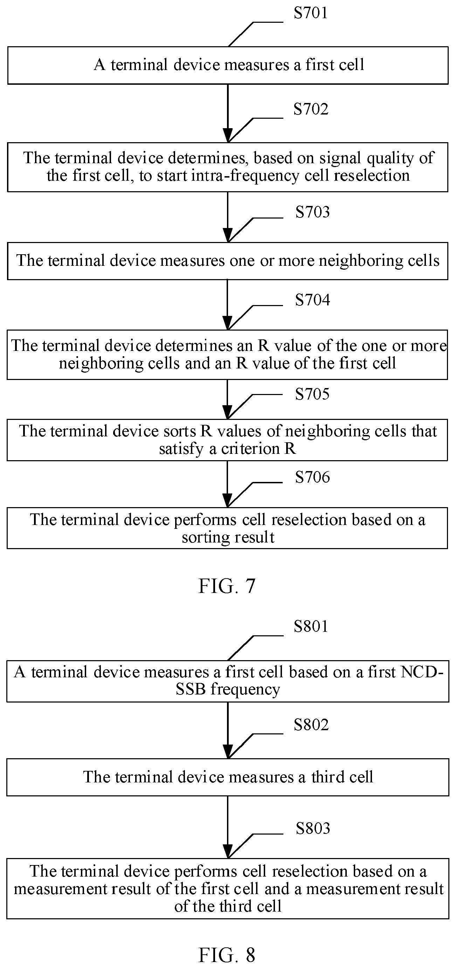

For ease of understanding of the solution, the following describes an intra-frequency cell reselection process of a terminal device, as shown in FIG. 7.

S701: The terminal device measures a first cell.

Specifically, for a manner of measuring the first cell by the terminal device, refer to Manner 1.1 to Manner 1.3. Details are not described herein again.

S702: The terminal device determines, based on signal quality of the first cell, to start intra-frequency cell reselection.

In an implementation, if the terminal device performs signal measurement on the first cell based on a CD-SSB frequency, that is, Manner 1.1 is used, the terminal device may determine to start the intra-frequency cell reselection when the signal quality of the first cell satisfies the following formulas: Srxlev_{CD-SSB≤}SIntraSearchP_{CD-SSB} and Squal_{CD-SSB}≤SIntraSearchQ_{CD-SSB}.

Srxlev_{CD-SSB} and Squal_{CD-SSB} are determined based on a result of measuring the first cell based on the CD-SSB frequency. For details, refer to the manner of determining Srxlev and Squal in the foregoing descriptions of the term 3. Details are not described herein again. SIntraSearchP_{CD-SSB} and SIntraSearchQ_{CD-SSB} are thresholds corresponding to the CD-SSB frequency for starting intra-frequency cell signal measurement, and may be broadcast by a network device by using a system message.

In another implementation, if the terminal device performs signal measurement on the first cell based on a first NCD-SSB frequency, that is, Manner 1.2 is used, the terminal device may determine to start the intra-frequency cell reselection when the signal quality of the first cell satisfies the following formulas: Srxlev_{NCD-SSB}≤SIntraSearchP_{NCD-SSB} and Squal_{NCD-SSB≤}SIntraSearchQ_{NCD-SSB}. SIntraSearchP_{NCD-SSB} and SIntraSearchQ_{NCD-SSB} are thresholds corresponding to the first NCD-SSB frequency for starting intra-frequency cell signal measurement, and may be broadcast by a network device by using a system message.

Alternatively, the terminal device may determine to start the intra-frequency cell reselection when the signal quality of the first cell satisfies the following formulas: Srxlev_{NCD-SSB}+offset1≤SIntraSearchP_{CD-SSB} and SquaI_{NCD-SSB}+offset1≤SIntraSearchQ_{CD-SSB}; or Srxlev_{NCD-SSB}≤SIntraSearchP_{CD-SSB}-offset1, and Squal_{NCD-SSB}≤SIntraSearchQ_{CD-SSB}-offset1.

Srxlev_{NCD-SSB} and SquaI_{NCD-SSB} are determined based on a result of measuring the first cell based on the first NCD-SSB frequency. For details, refer to the manner of determining Srxlev and Squal in the foregoing descriptions of the term 3. Details are not described herein again.

In still another implementation, if the terminal device performs signal measurement on the first cell based on a first NCD-SSB frequency and a CD-SSB frequency, that is, Manner 1.2 is used, the terminal device may determine to start the intra-frequency cell reselection when the signal quality of the first cell satisfies the following formulas: (Srxlev_{CD-SSB}+Srxlev_{NCD-SSB}+offset1)/2≤SIntraSearchP_{CD-SSB} and (Squal_{CD-SSB}+Squal_{NCD-SSB}+offset1)/2<SIntraSearchQ_{CD-SSB}.

Optionally, the network device may send a power compensation value of the first cell when transmit power of a reference signal of the first cell on the first NCD-SSB frequency is different from transmit power of a reference signal of the first cell on the CD-SSB frequency.

S703: The terminal device measures one or more neighboring cells.

The one or more neighboring cells include the second cell described above.

Specifically, for a manner of measuring the one or more neighboring cells by the terminal device, refer to the related descriptions of S602. Details are not described herein again.

S704: The terminal device determines an R value of the one or more neighboring cells and an R value of the first cell.

In an implementation, the second cell in the one or more neighboring cells is used as an example. If measuring the second cell based on the first NCD-SSB frequency, the terminal device may determine an R value of the second cell based on a result of measuring the second cell based on the first NCD-SSB frequency and a power compensation value of the second cell. For example, an example in which the second cell is measured in Manner 2.1 is used. The R value of the second cell may satisfy the following condition: Rn=Qmeas,n-Qoffset-Qoffsettemp+offset2. For meanings of Rn, Qmeas,n, Qoffset and Qoffsettemp, refer to the related descriptions in the foregoing descriptions of the term 4, and offset2 is a power offset corresponding to the second cell.

Optionally, in step S701, if measuring the first cell based on the first NCD-SSB frequency, the terminal device may determine the R value of the first cell based on the result of measuring the first cell based on the first NCD-SSB frequency and the power compensation value of the first cell. For example, an example in which the first cell is measured in Manner 1.1 is used. The R value of the first cell may satisfy the following condition: Rs=Qmeas,s+Qhyst-Qoffsettemp+offset1. For meanings of Rs, Qmeas,s, Qhyst and Qoffsettemp, refer to the related descriptions in the foregoing descriptions of the term 4, and offset1 is a power offset corresponding to the first cell.

S705: The terminal device sorts R values of neighboring cells that satisfy a criterion R.

S706: The terminal device performs cell reselection based on a sorting result.

This embodiment of this application provides an NCD-SSB frequency-based measurement manner, so that when performing cell reselection in the intra-frequency neighboring cell, the terminal device can perform cell reselection based on the NCD-SSB frequency when no CD-SSB frequency is configured or cell reselection cannot be performed based on the CD-SSB frequency. This can avoid a problem that communication performance of the terminal device is poor because cell reselection cannot be performed. Therefore, according to the method provided in this embodiment of this application, flexibility of the cell reselection can be improved, and further, the communication performance of the terminal device can be improved.

In addition, the terminal device may measure the intra-frequency neighboring cell based on the NCD-SSB frequency, and the terminal device does not need to switch a BWP due to the measurement. Therefore, power consumption of the terminal device can be reduced. For example, the terminal device may directly receive paging and initiate an RACH on a BWP including the NCD-S SB frequency, instead of performing synchronization and measurement based on the CD-SSB frequency and then transferring to a BWP including the first NCD-SSB frequency to receive the paging and the RACH, so that faster access can be implemented, and frequent switching between different BWPs of the terminal device in an idle state can be reduced.

In addition, in this embodiment of this application, impact of different transmit power on the cell reselection can be reduced by using the power compensation value.

The intra-frequency cell reselection method is described above, and the following describes an inter-frequency cell reselection method. In the inter-frequency cell reselection method, for a neighboring cell with a same-priority frequency, the cell reselection method is similar to the intra-frequency cell reselection methods described in FIG. 6 and FIG. 7. A difference lies in that in the intra-frequency cell reselection method, the threshold for starting the intra-frequency cell signal measurement is used when the terminal device starts the intra-frequency cell reselection, while in the inter-frequency cell reselection method, a threshold for starting inter-frequency cell signal measurement is used when the terminal device starts inter-frequency cell reselection. For details, refer to the intra-frequency cell reselection methods described in FIG. 6 and FIG. 7, and repeated parts are not described again.

In the inter-frequency cell reselection method for the cell reselection method for a neighboring cell with a high-priority frequency, refer to the cell reselection method for the neighboring cell with the high-priority frequency in the inter-frequency cell reselection process in S302 in the foregoing descriptions of the term 4. For the cell reselection method for a neighboring cell with a low-priority frequency, refer to the cell reselection method for the neighboring cell with the low-priority frequency in the inter-frequency cell reselection process in S302 in the foregoing descriptions of the term 4.

The following describes the inter-frequency cell reselection method. As shown in FIG. 8, the inter-frequency cell reselection method includes the following steps.

S801: A terminal device measures a first cell based on a first NCD-SSB frequency.

For S801, refer to the related descriptions of S601. Details are not described herein again.

In a possible implementation, before step S801, the terminal device may determine that a measurement result of the first cell satisfies a threshold corresponding to the first NCD-SSB frequency. The threshold corresponding to the first NCD-SSB frequency is configured by a network device, or the threshold corresponding to the first NCD-SSB frequency is determined based on a threshold corresponding to a CD-SSB frequency and a power compensation value of the first cell. It should be noted that the threshold corresponding to the first NCD-SSB frequency in S801 may be different from the threshold corresponding to the first NCD-SSB frequency in S601. The threshold corresponding to the first NCD-SSB frequency in S601 is a threshold for starting intra-frequency cell reselection, and the threshold corresponding to the first NCD-SSB frequency in S801 is a threshold for starting inter-frequency cell reselection.

Specifically, for a manner in which the terminal device determines that the measurement result of the first cell satisfies the threshold corresponding to the first NCD-SSB frequency, refer to the foregoing descriptions, and repeated parts are not described again.

S802: The terminal device measures a third cell.

In an implementation, the terminal device may measure one or more neighboring cells, and the third cell is any one of the one or more neighboring cells. In this embodiment of this application, the third cell is used as an example to describe a manner of measuring the neighboring cell by the terminal device. For a manner of measuring another neighboring cell, refer to a manner of measuring the third cell.

S802 is similar to S602, but a difference lies in that in S602, the first NCD-SSB frequency is used by the terminal device to measure the second cell based on the NCD-SSB frequency, while in S802, a second NCD-SSB frequency is used by the terminal device to measure the third cell based on the NCD-SSB frequency. For S802, refer to the related descriptions of S602, and repeated parts are not described again.

Optionally, S802 may be further implemented in the following manner: The terminal device may measure the third cell based on the CD-SSB frequency by default.

S803: The terminal device performs cell reselection based on the measurement result of the first cell and a measurement result of the third cell.

S803 is similar to S603. For details, refer to the related descriptions of S603. Details are not described herein again.

In a possible implementation, if the measurement result of the first cell obtained by the terminal device based on the first NCD-SSB frequency is less than a first threshold, or a result determined based on the measurement result based on the first NCD-SSB frequency and a power compensation value of the first cell is less than a first threshold, the terminal device may fall back to camp on the CD-SSB frequency, and perform cell reselection based on the CD-SSB frequency. The first threshold may be a threshold for starting inter-frequency cell reselection, or the first threshold is different from a threshold for starting inter-frequency cell reselection.

In an implementation, the power compensation value of the first cell may be broadcast by the network device. For example, the network device may broadcast the power compensation value of the first cell when power of a reference signal of the first cell on the first NCD-SSB frequency is different from power of a reference signal of the first cell on the CD-SSB frequency.

In an implementation, a power compensation value of the third cell may be broadcast by the network device. For example, the network device may broadcast the power compensation value of the third cell when power of a reference signal of the third cell on the first NCD-SSB frequency is different from power of a reference signal of the third cell on the CD-SSB frequency.

Optionally, the network device may configure at least one NCD-SSB frequency in a system message. In specific implementation, the network device may explicitly or implicitly indicate a cell corresponding to the NCD-SSB frequency. For a specific indication manner, refer to the related descriptions of the at least one NCD-SSB frequency configured for intra-frequency cell reselection, and details are not described herein again.

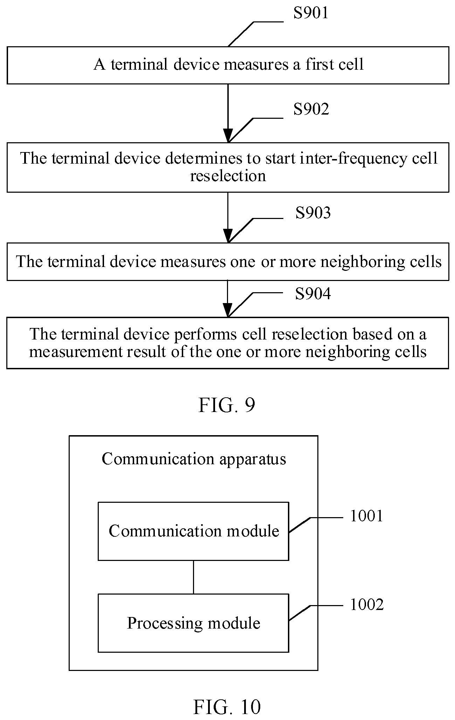

For ease of understanding of the solution, the following describes an inter-frequency cell reselection process of a terminal device, as shown in FIG. 9.

S901: The terminal device measures a first cell.

Specifically, for a manner of measuring the first cell by the terminal device, refer to the related descriptions of S801. Details are not described herein again.

S902: The terminal device determines to start inter-frequency cell reselection.

For neighboring cells with a high-priority frequency, the terminal device may always perform signal measurement on these neighboring cells.

For determining to start the inter-frequency cell reselection for a neighboring cell with a same-priority frequency and a neighboring cell with a low-priority frequency, refer to the related descriptions of S702. A difference lies in that the threshold for determining to start the intra-frequency cell reselection is used in S702, while a threshold for starting the inter-frequency cell signal measurement is used in S902.

Optionally, a network device may send a power compensation value of the first cell when transmit power of a reference signal of the first cell on a first NCD-SSB frequency is different from transmit power of a reference signal of the first cell on a CD-SSB frequency.

S903: The terminal device measures one or more neighboring cells.

The one or more neighboring cells include the third cell described above.

Specifically, for a manner of measuring the one or more neighboring cells by the terminal device, refer to the related descriptions of S802. Details are not described herein again.

S904: The terminal device performs cell reselection based on a measurement result of the one or more neighboring cells.

For a neighboring cell with a high-priority frequency, the terminal device may use, as a target cell, a neighboring cell with a highest-priority frequency in candidate neighboring cells that satisfy the following conditions, where the conditions include that both Srxlev and Squal of the neighboring cell satisfy corresponding thresholds respectively, and duration is greater than preset duration. The threshold is a threshold used for the neighboring cell to reselect the neighboring cell with the high-priority frequency.

If the neighboring cell is measured based on a second NCD-SSB frequency, Srxlev and Squal of the neighboring cell may be determined based on a measurement result of the neighboring cell and a power compensation value of the neighboring cell.

For example, Srxlev of the neighboring cell may satisfy the following formula: Srxlev=Qrxlevmeas-(Qrxlevmin+Qrxlevminoffset)-Pcompensation-Qoffsettemp+offset3 or Srxlev=Qrxlevmeas-(Qrxlevmin+Qrxlevminoffset)-Pcompensation-Qoffsettemp-offset3. For meanings of Qrxlevmeas, Qrxlevmin, Qrxlevminoffset, Pcompensation and Qoffsettemp, refer to the related descriptions in the foregoing descriptions of the term 3, and offset3 is the power compensation value corresponding to the neighboring cell.

Squal of the neighboring cell may satisfy the following formula: Squal=Qqualmeas-(Qqualmin+Qqualminoffset)-Qoffsettemp+offset3 or Squal=Qqualmeas-(Qqualmin+Qqualminoffset)-Qoffsettemp-offset3. For meanings of Qqualmeas, Qqualmin, Qqualminoffset and Qoffsettemp, refer to the related descriptions in the foregoing descriptions of the term 3.

If no neighboring cell with the high-priority satisfies the cell reselection conditions, the terminal device may select the target cell from neighboring cells with the same-priority frequency. A specific implementation is similar to that in S704, reference may be made to the related descriptions of S704, and details are not described herein again.

If no neighboring cell with the high-priority frequency and no neighboring cell with the same-priority frequency satisfy the cell reselection conditions, the terminal device may select the target cell from neighboring cells with the low-priority frequency. For the neighboring cell with the low-priority frequency, if both Srxlev and Squal of the first cell are less than corresponding thresholds respectively, where the threshold is a threshold used for the first cell to reselect the neighboring cell with the low-priority frequency, and both Srxlev and Squal of the neighboring cell are greater than corresponding thresholds, where the threshold is a threshold used for the neighboring cell to reselect the neighboring cell with the low-priority frequency, and duration is greater than preset duration.

For a manner of determining Srxlev and Squal of the first cell and Srxlev and Squal of the neighboring cell, refer to the foregoing manner of determining Srxlev and Squal of the neighboring cell of the high-priority frequency.

This embodiment of this application provides an NCD-SSB frequency-based measurement manner, so that when performing cell reselection in the inter-frequency neighboring cell, the terminal device can perform cell reselection based on the NCD-SSB frequency when no CD-SSB frequency is configured or cell reselection cannot be performed based on the CD-SSB frequency. This can avoid a problem that communication performance of the terminal device is poor because cell reselection cannot be performed. Therefore, according to the method provided in this embodiment of this application, flexibility of the cell reselection can be improved, and further, the communication performance of the terminal device can be improved.

In addition, the terminal device may measure the inter-frequency neighboring cell based on the NCD-SSB frequency, and the terminal device does not need to switch a BWP due to the measurement. Therefore, power consumption of the terminal device can be reduced. For example, the terminal device may directly receive paging and initiate an RACH on a BWP including the NCD-S SB frequency, instead of performing synchronization and measurement based on the CD-SSB frequency and then transferring to the BWP including the first NCD-SSB frequency to receive the paging and the RACH, so that faster access can be implemented, and frequent switching between different BWPs of the terminal device in an idle state can be reduced.

In addition, in this embodiment of this application, impact of different transmit power on the cell reselection can be reduced by using the power compensation value.

Based on a same technical concept as the method embodiments, an embodiment of this application provides a communication apparatus. A structure of the communication apparatus may be shown in FIG. 10, and the communication apparatus includes a processing module 1002 and further includes a communication module 1001.

In an implementation, the communication apparatus may be specifically configured to implement the method performed by the terminal device in embodiments in FIG. 6 to FIG. 9. The apparatus may be the terminal device, or may be a chip in the terminal device, a chip set, or a part of a chip that is configured to perform a related method function. The processing module 1002 is configured to: measure a first cell based on a first NCD-SSB frequency; measure a second cell based on the first NCD-SSB frequency and/or a CD-SSB frequency; and perform cell reselection based on a measurement result of the first cell and a measurement result of the second cell.

Optionally, the communication module 1001 is configured to receive first information from a network device, where the first information indicates that the first NCD-SSB frequency can be used for neighboring cell measurement. When measuring the first cell based on the first NCD-SSB frequency, the processing module 1002 is specifically configured to measure, based on the first information from the network device, the second cell based on the first NCD-SSB frequency.

Optionally, when measuring the second cell based on the first NCD-SSB frequency and/or the CD-SSB frequency, the processing module 1002 is specifically configured to: measure the second cell based on the first NCD-SSB frequency; determine, based on the measurement result of the second cell, that the second cell cannot be used as a target cell for reselection; and measure the second cell based on the CD-SSB frequency.

Optionally, the communication module 1001 is further configured to receive second information from a network device, where the second information indicates that a neighboring cell is measured based on the CD-SSB frequency.

For example, the communication module 1001 is configured to receive third information from a network device, where the third information indicates that neighboring cell measurement can be performed only based on the CD-SSB frequency. When measuring the second cell based on the CD-SSB frequency, the processing module 1002 is specifically configured to measure, based on the third information from the network device, the second cell based on the CD-SSB frequency.

Optionally, the processing module 1002 is further configured to: before the second cell is measured based on the first NCD-SSB frequency and/or the CD-SSB frequency, determine that the measurement result of the first cell satisfies a threshold corresponding to the first NCD-SSB frequency. The threshold corresponding to the first NCD-SSB frequency is configured by the network device, or the threshold corresponding to the first NCD-SSB frequency is determined based on a threshold corresponding to the CD-SSB frequency and a power compensation value of the first cell.

Optionally, when performing cell reselection based on the measurement result of the first cell and the measurement result of the second cell, the processing module 1002 is specifically configured to: determine an R value of the first cell based on the measurement result of the first cell; determine an R value of the second cell based on the measurement result of the second cell; and perform cell reselection based on the R value of the first cell and the R value of the second cell.

Optionally, when determining the R value of the first cell based on the measurement result of the first cell, the processing module 1002 is specifically configured to determine the R value of the first cell based on the measurement result of the first cell and the power compensation value of the first cell.

Optionally, when determining the R value of the second cell based on the measurement result of the second cell, the processing module 1002 is specifically configured to determine the R value of the second cell based on the measurement result of the second cell and a power compensation value of the second cell.

In an implementation, the communication apparatus may be specifically configured to implement the method performed by the network device in embodiments in FIG. 6 to FIG. 9. The apparatus may be the network device, or may be a chip in the network device, a chip set, or a part of a chip that is configured to perform a related method function. The processing module 1002 is configured to determine indication information based on a configuration of an NCD-SSB frequency of a second cell of a terminal device, where the indication information indicates that a first NCD-SSB frequency and/or a CD-SSB frequency are/is used by the terminal device to measure the second cell, and the terminal device camps on a first cell in an idle state or an inactive state. The communication module 1001 is configured to send the indication information to the terminal device.

Optionally, the communication module 1001 is further configured to send fourth information and/or fifth information to the terminal device, where the fourth information indicates a power compensation value of the first cell, and the fifth information indicates a power compensation value of the second cell.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to the related descriptions in the method embodiments.

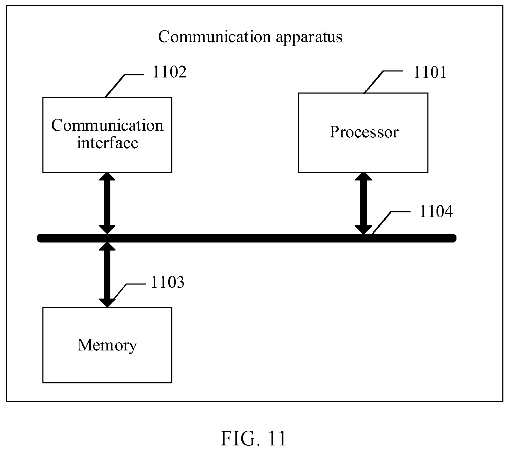

In a possible manner, the communication apparatus may be shown in FIG. 11. The apparatus may be a communication device or a chip in a communication device. The communication device may be the terminal device in the foregoing embodiments or the network device in the foregoing embodiments. The apparatus includes a processor 1101 and a communication interface 1102, and may further include a memory 1103. The processing module 1002 may be the processor 1101. The communication module 1001 may be the communication interface 1102.

The processor 1101 may be a CPU, a digital processing unit, or the like. The communication interface 1102 may be a transceiver, an interface circuit such as a transceiver circuit, a transceiver chip, or the like. The apparatus further includes the memory 1103, configured to store a program executed by the processor 1101. The memory 1103 may be a non-volatile memory such as a hard disk drive (hard disk drive, HDD) or a solid-state drive (solid-state drive, SSD), or may be a volatile memory (volatile memory) such as a random access memory (random access memory, RAM). The memory 1103 is any other medium that can be used to carry or store expected program code in a form of an instruction or a data structure and that can be accessed by a computer, but is not limited thereto.

The processor 1101 is configured to execute the program code stored in the memory 1103, and is specifically configured to perform an action of the processing module 1002. Details are not described herein in this application. The communication interface 1102 is specifically configured to perform an action of the communication module 1001. Details are not described herein again in this application.

A specific connection medium between the communication interface 1102, the processor 1101, and the memory 1103 is not limited in this embodiment of this application. In this embodiment of this application, the memory 1103, the processor 1101, and the communication interface 1102 are connected through a bus 1104 in FIG. 11. The bus is represented by using a bold line in FIG. 11. A manner of a connection between other components is merely an example for description, and is not limited thereto. Buses may be classified into an address bus, a data bus, a control bus, and the like. For ease of representation, only one bold line is used to represent the bus in FIG. 11, but this does not mean that there is only one bus or only one type of bus.

An embodiment of this application further provides a computer-readable storage medium, configured to store computer software instructions that need to be performed by the foregoing processor. The computer software instructions include a program that needs to be performed by the foregoing processor.

An embodiment of this application further provides a communication system. The communication system includes a communication apparatus configured to implement a function of the terminal device in the embodiment in FIG. 6 and a communication apparatus configured to implement a function of the network device in the embodiment in FIG. 6.

An embodiment of this application further provides a communication system. The communication system includes a communication apparatus configured to implement a function of the terminal device in the embodiment in FIG. 8 and a communication apparatus configured to implement a function of the network device in the embodiment in FIG. 8.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method is performed by a terminal device or a chip in a terminal device, the terminal device camps on a first cell in an idle state or an inactive state, and the method comprises:
measuring (S601), the first cell based on a first non-cell defining synchronization signal/physical broadcast channel block, NCD-SSB, frequency;
determining (S602), that the measurement result of the first cell satisfies a threshold corresponding to the first NCD-SSB frequency, wherein the threshold corresponding to the first NCD-SSB frequency is determined based on a threshold corresponding to the CD-SSB frequency and a power compensation value of the first cell;
subsequently measuring, a second cell based on the first NCD-SSB frequency and/or a cell defining synchronization signal/physical broadcast channel block, CD-SSB, frequency; and
performing (S603), cell reselection based on a measurement result of the first cell and a measurement result of the second cell.

2. The method according to claim 1, wherein the measuring, a second cell based on the first NCD-SSB frequency comprises:
measuring, based on first information from a network device, the second cell based on the first NCD-SSB frequency, wherein the first information indicates that the first NCD-SSB frequency can be used for neighboring cell measurement.

3. The method according to claim 1, wherein the measuring, a second cell based on the first NCD-SSB frequency and a CD-SSB frequency comprises:
measuring, the second cell based on the first NCD-SSB frequency;
determining, based on the measurement result of the second cell, that the second cell cannot be used as a target cell for reselection; and
measuring, the second cell based on the CD-SSB frequency.

4. The method according to claim 3, wherein before the measuring, the second cell based on the first NCD-SSB frequency, the method further comprises:
receiving, second information from an access network device, wherein the second information indicates that a neighboring cell is to be measured based on the CD-SSB frequency.

5. The method according to claim 1, wherein the measuring, a second cell based on a CD-SSB frequency comprises:
measuring, based on third information from a network device, the second cell based on the CD-SSB frequency, wherein the third information indicates that neighboring cell measurement can be performed only based on the CD-SSB frequency.

6. The method according to any one of claims 1 to 5, wherein the performing, cell reselection based on a measurement result of the first cell and a measurement result of the second cell comprises:
determining, an R value of the first cell based on the measurement result of the first cell;
determining, an R value of the second cell based on the measurement result of the second cell; and
performing, cell reselection based on the R value of the first cell and the R value of the second cell.

7. The method according to claim 6, wherein the determining, an R value of the first cell based on the measurement result of the first cell comprises:
determining, the R value of the first cell based on the measurement result of the first cell and the power compensation value of the first cell.

8. The method according to claim 6 or 7, wherein the determining, an R value of the second cell based on the measurement result of the second cell comprises:
determining, the R value of the second cell based on the measurement result of the second cell and a power compensation value of the second cell.

9. A communication method, wherein the method is performed by an access network device or a chip in an access network device, comprising:
determining, indication information based on a configuration of a non-cell defining synchronization signal/physical broadcast channel block, NCD-SSB, frequency of a second cell, wherein the indication information indicates that a first NCD-SSB frequency and/or a cell defining synchronization signal/physical broadcast channel block, CD-SSB, frequency are/is to be used by a terminal device to measure the second cell when the terminal device camps on a first cell in an idle state or an inactive state; and
sending, the indication information to the terminal device; and
sending, fourth information to the terminal device, wherein the fourth information indicates a power compensation value of the first cell.

10. The method according to claim 9, wherein that the indication information indicates that a first NCD-SSB frequency is used by a terminal device to measure the second cell specifically comprises: the indication information indicates that the first NCD-SSB frequency can be used for neighboring cell measurement;
that the indication information indicates that a first NCD-SSB frequency or a CD-SSB frequency are used by a terminal device to measure the second cell specifically comprises: the indication information indicates that a neighboring cell is measured based on the CD-SSB frequency; or
that the indication information indicates that a CD-SSB frequency is used by a terminal device to measure the second cell specifically comprises: the indication information indicates that neighboring cell measurement can be performed only based on the CD-SSB frequency.

11. The method according to claim 9 or 10, wherein the method further comprises:
sending fifth information to the terminal device, wherein the fifth information indicates a power compensation value of the second cell.

12. A terminal device or chip configured to be in a terminal device which is configured to camp on a first cell, configured to perform the method according to any one of claims 1 to 8.

13. An access network device or chip configured to be in an access network device, configured to perform the method according to any one of claims 9 to 11.

14. A computer-readable storage medium, wherein the computer-readable storage medium is configured to store computer instructions; and when the computer instructions are run on a terminal device or a chip configured to be in a terminal device, the terminal device or a chip configured to be in a terminal device is enabled to perform the method according to any one of claims 1 to 8, and when the computer instructions are run on an access network device or a chip configured to be in an access network device, the access network device or a chip configured to be in an access network device is enabled to perform the method according to any one of claims 9 to 11.

## Patentansprüche

1. Kommunikationsverfahren, wobei das Verfahren durch ein Endgerät oder einen Chip in einem Endgerät durchgeführt wird, das Endgerät in einem Leerlaufzustand oder einem inaktiven Zustand auf einer ersten Zelle kampiert und das Verfahren umfasst:
Messen (S601) der ersten Zelle basierend auf einer ersten nicht zellendefinierenden Synchronisationssignal/physikalischen Übertragungskanalblock(NCD-SSB)-Frequenz;
Bestimmen (S602), dass das Messergebnis der ersten Zelle eine Schwelle, die der ersten NCD-SSB-Frequenz entspricht, erfüllt, wobei die Schwelle, die der ersten NCD-SSB-Frequenz entspricht, basierend auf einer Schwelle, die der CD-SSB-Frequenz und einem Leistungskompensationswert der ersten Zelle entspricht, bestimmt wird;
anschließendes Messen einer zweiten Zelle basierend auf der ersten NCD-SSB-Frequenz und/oder einer zellendefinierenden Synchronisationssignal/physikalischen Übertragungskanalblock(CD-SSB)-Frequenz; und
Durchführen (S603) einer Zellneuauswahl basierend auf einem Messergebnis der ersten Zelle und einem Messergebnis der zweiten Zelle.

2. Verfahren nach Anspruch 1, wobei das Messen einer zweiten Zelle basierend auf der ersten NCD-SSB-Frequenz umfasst:
Messen, basierend auf ersten Informationen von einer Netzwerkvorrichtung, der zweiten Zelle basierend auf der ersten NCD-SSB-Frequenz, wobei die ersten Informationen anzeigen, dass die erste NCD-SSB-Frequenz für eine Messung angrenzender Zellen verwendet werden kann.

3. Verfahren nach Anspruch 1, wobei das Messen einer zweiten Zelle basierend auf der ersten NCD-SSB-Frequenz und einer CD-SSB-Frequenz umfasst:
Messen der zweiten Zelle basierend auf der ersten NCD-SSB-Frequenz;
Bestimmen, basierend auf dem Messergebnis der zweiten Zelle, dass die zweite Zelle nicht als eine Zielzelle für eine Neuauswahl verwendet werden kann; und
Messen der zweiten Zelle basierend auf der CD-SSB-Frequenz.

4. Verfahren nach Anspruch 3, wobei vor dem Messen der zweiten Zelle basierend auf der ersten NCD-SSB-Frequenz das Verfahren ferner umfasst:
Empfangen zweiter Informationen von einer Zugangsnetzwerkvorrichtung, wobei die zweiten Informationen anzeigen, dass eine angrenzende Zelle basierend auf der CD-SSB-Frequenz gemessen werden soll.

5. Verfahren nach Anspruch 1, wobei das Messen einer zweiten Zelle basierend auf der CD-SSB-Frequenz umfasst:
Messen, basierend auf dritten Informationen von einer Netzwerkvorrichtung, der zweiten Zelle basierend auf der CD-SSB-Frequenz, wobei die dritten Informationen anzeigen, dass die Messung angrenzender Zellen nur basierend auf der CD-SSB-Frequenz durchgeführt werden kann.

6. Verfahren nach einem der Ansprüche 1 bis 5, wobei das Durchführen der Zellneuauswahl basierend auf einem Messergebnis der ersten Zelle und einem Messergebnis der zweiten Zelle umfasst:
Bestimmen eines R-Werts der ersten Zelle basierend auf dem Messergebnis der ersten Zelle;
Bestimmen eines R-Werts der zweiten Zelle basierend auf dem Messergebnis der zweiten Zelle; und
Durchführen der Zellneuauswahl basierend auf dem R-Wert der ersten Zelle und dem R-Wert der zweiten Zelle.

7. Verfahren nach Anspruch 6, wobei das Bestimmen eines R-Werts der ersten Zelle basierend auf dem Messergebnis der ersten Zelle umfasst:
Bestimmen des R-Werts der ersten Zelle basierend auf dem Messergebnis der ersten Zelle und dem Leistungskompensationswert der ersten Zelle.

8. Verfahren nach Anspruch 6 oder 7, wobei das Bestimmen eines R-Werts der zweiten Zelle basierend auf dem Messergebnis der zweiten Zelle umfasst:
Bestimmen des R-Werts der zweiten Zelle basierend auf dem Messergebnis der zweiten Zelle und einem Leistungskompensationswert der zweiten Zelle.

9. Kommunikationsverfahren, wobei das Verfahren durch eine
Zugangsnetzwerkvorrichtung oder einen Chip in einer Zugangsnetzwerkvorrichtung durchgeführt wird, das umfasst:
Bestimmen von Anzeigeinformationen basierend auf einer Konfiguration einer nicht zellendefinierenden Synchronisationssignal/physikalischen Übertragungskanalblock(NCD-SSB)-Frequenz einer zweiten Zelle, wobei die Anzeigeinformationen anzeigen, dass eine erste NCD-SSB-Frequenz und/oder eine zellendefinierende Synchronisationssignal/physikalische Übertragungskanalblock(CD-SSB)-Frequenz durch ein Endgerät verwendet werden soll, um die zweite Zelle zu messen, wenn das Endgerät in einem Leerlaufzustand oder einem inaktiven Zustand auf einer ersten Zelle kampiert;
Senden der Anzeigeinformationen an das Endgerät; und
Senden vierter Informationen an das Endgerät, wobei die vierten Informationen einen Leistungskompensationswert der ersten Zelle anzeigen.

10. Verfahren nach Anspruch 9, wobei, dass die Anzeigeinformationen anzeigen, dass eine erste NCD-SSB-Frequenz durch ein Endgerät verwendet wird, um die zweite Zelle zu messen, insbesondere umfasst: die Anzeigeinformationen zeigen an, dass die erste NCD-SSB-Frequenz für die Messung angrenzender Zellen verwendet werden kann;
dass die Anzeigeinformationen anzeigen, dass eine erste NCD-SSB-Frequenz oder eine CD-SSB-Frequenz durch ein Endgerät verwendet wird, um die zweite Zelle zu messen, insbesondere umfasst: die Anzeigeinformationen zeigen an, dass eine angrenzende Zelle basierend auf der CD-SSB-Frequenz gemessen wird; oder
dass die Anzeigeinformationen anzeigen, dass eine CD-SSB-Frequenz durch ein Endgerät verwendet wird, um die zweite Zelle zu messen, insbesondere umfasst: die Anzeigeinformationen zeigen an, dass die Messung angrenzender Zellen nur basierend auf der CD-SSB-Frequenz durchgeführt werden kann.

11. Verfahren nach Anspruch 9 oder 10, wobei das Verfahren ferner umfasst:
Senden von fünften Informationen an das Endgerät, wobei die fünften Informationen einen Leistungskompensationswert der zweiten Zelle anzeigen.

12. Endgerät oder Chip, der konfiguriert ist, um sich in einem Endgerät zu befinden, das konfiguriert ist, um auf einer ersten Zelle zu kampieren, und konfiguriert ist, um das Verfahren nach einem der Ansprüche 1 bis 8 durchzuführen.

13. Zugangsnetzwerkvorrichtung oder Chip, der konfiguriert ist, um sich in einer Zugangsnetzwerkvorrichtung zu befinden, und konfiguriert ist, um das Verfahren nach einem der Ansprüche 9 bis 11 durchzuführen.

14. Computerlesbares Speicherungsmedium, wobei das computerlesbare Speicherungsmedium konfiguriert ist, um Computeranweisungen zu speichern; und wenn die Computeranweisungen auf einem Endgerät oder einem Chip, der konfiguriert ist, um sich in einem Endgerät zu befinden, vorgenommen werden, das Endgerät oder der Chip, der konfiguriert ist, um sich in einem Endgerät zu befinden, aktiviert sind, das Verfahren nach einem der Ansprüche 1 bis 8 durchzuführen, und wenn die Computeranweisungen auf einer Zugangsnetzwerkvorrichtung oder einem Chip, der konfiguriert ist, um sich in einer Zugangsnetzwerkvorrichtung zu befinden, vorgenommen werden, die Zugangsnetzwerkvorrichtung oder der Chip, der konfiguriert ist, um sich in einer Zugangsnetzwerkvorrichtung zu befinden, aktiviert sind, das Verfahren nach einem der Ansprüche 9 bis 11 durchzuführen.

## Revendications

1. Procédé de communication, dans lequel le procédé est réalisé par un dispositif terminal ou une puce dans un dispositif terminal, le dispositif terminal campe sur une première cellule dans un état de veille ou un état inactif, et le procédé comprend :
la mesure (S601) de la première cellule sur la base d'une première fréquence de bloc de canal de diffusion physique/signal de synchronisation ne définissant pas la cellule, NCD-SSB ;
le fait de déterminer (S602) que le résultat de mesure de la première cellule satisfait à un seuil correspondant à la première fréquence NCD-SSB, dans lequel le seuil correspondant à la première fréquence NCD-SSB est déterminé sur la base d'un seuil correspondant à la fréquence CD-SSB et d'une valeur de compensation de puissance de la première cellule ;
la mesure subséquente d'une seconde cellule sur la base de la première fréquence NCD-SSB et/ou d'une fréquence de bloc de canal de diffusion physique/signal de synchronisation définissant la cellule, CD-SSB ; et
la réalisation (S603) d'une resélection de cellule sur la base d'un résultat de mesure de la première cellule et d'un résultat de mesure de la seconde cellule.

2. Procédé selon la revendication 1, dans lequel la mesure d'une seconde cellule sur la base de la première fréquence NCD-SSB comprend :
la mesure, sur la base de premières informations provenant d'un dispositif de réseau, de la seconde cellule sur la base de la première fréquence NCD-SSB, dans lequel les premières informations indiquent que la première fréquence NCD-SSB peut être utilisée pour la mesure de cellule voisine.

3. Procédé selon la revendication 1, dans lequel la mesure d'une seconde cellule sur la base de la première fréquence NCD-SSB et d'une fréquence CD-SSB comprend :
la mesure de la seconde cellule sur la base de la première fréquence NCD-SSB ;
le fait de déterminer, sur la base du résultat de mesure de la seconde cellule, que la seconde cellule ne peut pas être utilisée comme cellule cible pour la resélection ; et
la mesure de la seconde cellule sur la base de la fréquence CD-SSB.

4. Procédé selon la revendication 3, dans lequel, avant la mesure de la seconde cellule sur la base de la première fréquence NCD-SSB, le procédé comprend en outre :
la réception de deuxièmes informations provenant d'un dispositif de réseau d'accès, dans lequel les deuxièmes informations indiquent qu'une cellule voisine doit être mesurée sur la base de la fréquence CD-SSB.

5. Procédé selon la revendication 1, dans lequel la mesure d'une seconde cellule sur la base d'une fréquence CD-SSB comprend :
la mesure, sur la base de troisièmes informations provenant d'un dispositif de réseau, de la seconde cellule sur la base de la fréquence CD-SSB, dans lequel les troisièmes informations indiquent qu'une mesure de cellule voisine ne peut être réalisée que sur la base de la fréquence CD-SSB.

6. Procédé selon l'une quelconque des revendications 1 à 5, dans lequel la réalisation de la resélection de cellule sur la base d'un résultat de mesure de la première cellule et d'un résultat de mesure de la seconde cellule comprend :
la détermination d'une valeur R de la première cellule sur la base du résultat de mesure de la première cellule ;
la détermination d'une valeur R de la seconde cellule sur la base du résultat de mesure de la seconde cellule ; et
la réalisation d'une resélection de cellules sur la base de la valeur R de la première cellule et de la valeur R de la seconde cellule.

7. Procédé selon la revendication 6, dans lequel la détermination d'une valeur R de la première cellule sur la base du résultat de mesure de la première cellule comprend :
la détermination de la valeur R de la première cellule sur la base du résultat de mesure de la première cellule et de la valeur de compensation de puissance de la première cellule.

8. Procédé selon la revendication 6 ou 7, dans lequel la détermination d'une valeur R de la seconde cellule sur la base du résultat de mesure de la seconde cellule comprend :
la détermination de la valeur R de la seconde cellule sur la base du résultat de mesure de la seconde cellule et d'une valeur de compensation de puissance de la seconde cellule.

9. Procédé de communication, dans lequel le procédé est réalisé par un dispositif de réseau d'accès ou une puce dans un dispositif de réseau d'accès, comprenant :
la détermination d'informations d'indication sur la base d'une configuration d'une fréquence de bloc de canal de diffusion physique/signal de synchronisation ne définissant pas la cellule, NCD-SSB, d'une seconde cellule, dans lequel les informations d'indication indiquent qu'une première fréquence NCD-SSB et/ou une fréquence de bloc de canal de diffusion physique/signal de synchronisation définissant la cellule, CD-SSB, doivent être utilisées par un dispositif terminal pour mesurer la seconde cellule lorsque le dispositif terminal campe sur une première cellule dans un état de veille ou un état inactif ;
l'envoi des informations d'indication au dispositif terminal ; et
l'envoi de quatrièmes informations au dispositif terminal, dans lequel les quatrièmes informations indiquent une valeur de compensation de puissance de la première cellule.

10. Procédé selon la revendication 9, dans lequel le fait que les informations d'indication indiquent qu'une première fréquence NCD-SSB est utilisée par un dispositif terminal pour mesurer la seconde cellule comprend spécifiquement : les informations d'indication indiquent que la première fréquence NCD-SSB peut être utilisée pour la mesure de cellule voisine ;
le fait que les informations d'indication indiquent qu'une première fréquence NCD-SSB ou une fréquence CD-SSB sont utilisées par un dispositif terminal pour mesurer la seconde cellule comprend spécifiquement : les informations d'indication indiquent qu'une cellule voisine est mesurée sur la base de la fréquence CD-SSB ; ou
le fait que les informations d'indication indiquent qu'une fréquence CD-SSB est utilisée par un dispositif terminal pour mesurer la seconde cellule comprend spécifiquement :
les informations d'indication indiquent que la mesure de cellule voisine ne peut être réalisée que sur la base de la fréquence CD-SSB.

11. Procédé selon la revendication 9 ou 10, dans lequel le procédé comprend en outre : l'envoi de cinquièmes informations au dispositif terminal, dans lequel les cinquièmes informations indiquent une valeur de compensation de puissance de la seconde cellule.

12. Dispositif terminal ou puce configurée pour être dans un dispositif terminal qui est configuré pour camper sur une première cellule, configuré pour réaliser le procédé selon l'une quelconque des revendications 1 à 8.

13. Dispositif de réseau d'accès ou puce configurée pour être dans un dispositif de réseau d'accès, configuré pour réaliser le procédé selon l'une quelconque des revendications 9 à 11.

14. Support de stockage lisible par ordinateur, dans lequel le support de stockage lisible par ordinateur est configuré pour stocker des instructions informatiques ; et lorsque les instructions informatiques sont exécutées sur un dispositif terminal ou une puce configurée pour être dans un dispositif terminal, le dispositif terminal ou une puce configurée pour être dans un dispositif terminal est capable de réaliser le procédé selon l'une quelconque des revendications 1 à 8, et lorsque les instructions informatiques sont exécutées sur un dispositif de réseau d'accès ou une puce configurée pour être dans un dispositif de réseau d'accès, le dispositif de réseau d'accès ou une puce configurée pour être dans un dispositif de réseau d'accès est capable de réaliser le procédé selon l'une quelconque des revendications 9 à 11.
